Europäisches Patentamt

(19) European Patent Office

Office européen des brevets

(11) Publication number: **0 107 919**
**A1**

## (12) EUROPEAN PATENT APPLICATION

(21) Application number: 83305808.4

(22) Date of filing: 28.09.83

(51) Int. Cl.³: **C 04 B 35/58**

(30) Priority: 01.10.82 GB 8228174
20.05.83 GB 8314003

(43) Date of publication of application:
09.05.84 Bulletin 84/19

(84) Designated Contracting States:
CH DE FR IT LI NL SE

(71) Applicant: The British Ceramic Research Association Limited
Queens Road Penkhull
Stoke-on-Trent Staffordshire(GB)

(72) Inventor: Cotton, John William care of The British Ceramic
Research Ass. Limited Queens Road Penkhull
Stoke-on-Trent ST4 7LQ Staffordshire(GB)

(72) Inventor: Swindells, Robert care of The British Ceramic
Research Ass. Limited Queens Road Penkhull
Stoke-on-Trent ST4 7LQ Staffordshire(GB)

(74) Representative: Campbell, Iain Angus et al,
Swindell & Pearson 44 Friar Gate
Derby DE1 1DA(GB)

(54) Silicon nitride ceramic bodies.

(57) A method of making a ceramic body by sintering a compact containing silicon nitride and one or more oxide sintering aids selected from the group comprising the oxides of magnesium, yttrium, chromium, molybdenum, iron, manganese, tungsten, cobalt, vanadium, uranium, nickel, titanium, hafnium, zirconium, niobium and tantalum.

EP 0 107 919 A1

Croydon Printing Company Ltd.

-1-

Title:    SILICON NITRIDE CERAMIC BODIES

The invention relates to silicon nitride ceramic bodies and a method of manufacturing such bodies.

It is known to provide ceramic bodies of a nonporous ceramic material containing a reaction product of silicon, aluminium, oxygen and nitrogen by sintering. Due to the formation of an intergranular glass phase, which is of low strength at elevated temperature, it is necessary with such products to sinter under pressure, or to heat treat the sintered product to obtain good high-temperature strength. These methods are inconvenient, require a large amount of energy and typically can take a day or so to produce a product having high strength at elevated temperatures.

The present invention seeks to provide a method of making a ceramic body, and a ceramic body made by the method, permitting the use of pressures at or about atmospheric, the body having high strength at elevated temperatures.

The present invention provides a method of making a ceramic body by sintering a compact containing silicon nitride and one or more oxide sintering aids selected from the group comprising the oxides of magnesium, yttrium, chromium, molybdenum, iron, manganese, tungsten, cobalt, vanadium, uranium, nickel, titanium, hafnium, zirconium, niobium and tantalum.

Preferably the body is produced by forming a compact from a mixture of silicon nitride powder and one or more of said oxide sintering aids and sintering the compact. Alternatively the body may be produced by forming a compact from a mixture of silicon and one or more of said sintering aids, heat treating the compact in a nitrogen-containing atmosphere to produce a reaction-bonded silicon nitride composite and sintering the composite.

Thus the invention also provides a method of making a ceramic body by forming a compact of silicon powder and one or more oxide sintering aids selected from the group comprising the oxides of magnesium, yttrium, chromium, molybdenum, iron, magnanese, tungsten, cobalt, vanadium, uranium, nickel, titanium, hafnium, zirconium, niobium and tantalum, heating the compact in the presence of nitrogen to form a reaction-bonded silicon nitride composite and then sintering the composite to form the ceramic body.

Preferably the sintering aids are present in an amount such that the total oxygen content of the sintered body, or of the reaction-bonded composite, including any oxygen derived from impurities or contaminants, is in the range 3-7% and preferably 4-7% by weight. The sintering aid(s) are preferably present in amounts such that the total oxygen content is in the range 4-7% by weight, desirably 5-6% by weight, and most preferably 5.5% by weight.

Preferably at least one of the group of sintering aids comprising magnesium oxide, yttrium oxide and chromium oxide is included. Desirably two and most preferably all three are included. Yttrium oxide is preferably present in an amount of 0.1-12%, desirably 4-12%, by weight, magnesium oxide is preferably present in an amount of 0.1-5% by weight, and chromium oxide in an amount of 0.1-3% by weight.

The total amount of the sintering aid(s) is preferably 0.1-20% of the weight of the aids plus silicon nitride.

The sintering is preferably carried out in a substantially oxygen-free atmosphere, for example an atmosphere of nitrogen (90%) and hydrogen (10%). This nitrogen-rich atmosphere may be provided by carrying out the heating in a powder bed capable of supplying nitrogen after formation of the body by pressing or some other shaping process to a desired shape. The bed is preferably composed of silicon nitride, boron nitride and magnesium oxide, desirably substantially in the proportion 50:40:10 by weight respectively. The bed may advantageously be contained in an inert crucible.

The sintering is preferably carried out at between 1200°C and 1800°C, preferably about 1700°C. The firing time may be about twenty minutes to about five hours, typically about two hours. Where a silicon nitride composite is initially formed from a silicon compact, the heating is preferably carried out at 1200 - 1400°C for 72 - 200 hours depending upon the temperature used.

The invention also provides a sintered ceramic body made in accordance with the aforesaid method.

It is believed that the ceramic body of the invention includes silicon nitride and analysis of the microstructure of the product has shown the presence of a metallic phase, which appears to be a metal silicide, but this is not believed to be a reaction product of oxygen and a metal derived from the sintering aid.

The following are examples of the invention given by way of example only and not by way of limitation.

Example 1

Composition                              w%

Silicon Nitride    86.5

Yttrium Oxide      10.0

Magnesium Oxide     2.0

Chromic Oxide       1.5

The silicon nitride and oxides were blended

-5-

intimately by milling in an attrition mill using 2.0mm diameter zirconia grinding media and anhydrous ethanol as the dispersing fluid. The milling time was 30 minutes at 1000 rpm.

The resulting slurry was filtered to remove the grinding media, dried, crushed and sieved to give granules of not greater than 250 μm. Test pieces were obtained by isostatic pressing in latex rubber tooling and firing was performed at 1600°C with the specimen immersed in a powder bed composed of 50% silicon nitride, 40% boron nitride and 10% magnesium oxide the whole being contained in a boron nitride crucible. The furnace had a molybdenum sheet heater and operated in an atmosphere of nitrogen (90%) plus hydrogen (10%). After firing to 1600°C for 30 minutes a relative density of 3.18 was obtained. The microstructure showed the presence of a metallic phase. The strength at room temperature on machined bars of this composition was 600 Pa, and at 1200°C, 350 Pa. The oxygen content of the body was 5% by weight.

Example 2

| Composition | w% |
|---|---|
| Silicon Nitride | 84.75 |
| Yttrium Oxide | 10 |
| Magnesium Oxide | 2 |

-6-

Chromium Oxide 1.5

Silica 1.75

The composition was mixed in an attrition mill using absolute alcohol as the milling vehicle. Compacts were produced by isostatic pressing and were sintered at 1700°C for two hours in a powder bed of 50% silicon nitride, 40% boron nitride and 10% magnesia. The firing was carried out in a substantially pure nitrogen atmosphere.

Mechanical Properties  Relative Density 3.10 - 3.20

Modulus of Rupture Room Temp. 710 MPa.
1250°C      470 MPa.

Wiebull Modulus (Room Temp.)  12.0 The oxygen content of the sintered body was 5.5% by weight.

Example 3

Composition                                      w%

Silicon  (metal)    72.3

Yttrium Oxide       16.6

Magnesium Oxide      4.8

Tungsten Oxide       4.8

Silica               1.5

The composition was mixed by attrition milling using absolute alcohol as the milling vehicle. Compacts were produced by isostatic pressing, and heated in nitrogen, in a nitrogen demand furnace, (i.e. a furnace which is controlled to some extent in its heating rate, by the reaction of silicon with nitrogen) to a temperature of 1400°C to produce a reaction bonded silicon nitride composite which was then sintered as in Example 2.

<u>Mechanical Properties</u>  Modulus of Rupture (Room Temp.) 516 MPa

Wiebull Modulus                    17.5

The oxygen content of the composite was 5.5% by weight.

Various modifications may be made without departing from the scope of the invention.  For example other compounds or elements may be included in the sinter composition.  The temperature, atmosphere and sintering time may be chosen to suit the mixture being sintered. Where the body is produced from a mixture of silicon nitride powder and one or more of the aforesaid sintering aids it is desirable, but not essential, that the sintering is carried out in an oxygen-free atmosphere but the atmosphere need not contain nitrogen.  Where the body is produced by pre-heating of a compact of silicon and one or more of the aforesaid sintering aids the pre-heating must be carried out in a nitrogen-containing or nitrogen-generating atmosphere to produce the silicon nitride composite.

Claims:

1.    A method of making a ceramic body characterised by sintering a compact containing silicon nitride and one or more oxide sintering aids selected from the group comprising the oxides of magnesium, yttrium, chromium, molybdenum, iron, manganese, tungsten, cobalt, vanadium, uranium, nickel, titanium, hafnium, zirconium, niobium and tantalum.

2.    A method as claimed in claim 1, characterised in that the body is produced by forming a compact from a mixture of silicon nitride powder and one or more of said oxide sintering aids and sintering the compact.

3.    A method as claimed in claim 2, characterised in that the sintering aid or aids are present in an amount such that the total oxygen present in the sintered body, including any oxygen derived from impurities or contaminants, is in the range 3-7% by weight.

4.    A method as claimed in claim 1, characterised in that the body is produced by forming a compact from a mixture of silicon and one or more of said sintering aids, heat treating the compact in a nitrogen containing atmosphere to produce a reaction-bonded silicon nitride composite and sintering the composite.

5.    A method as claimed in claim 4, characterised in that the sintering aid or aids are present in an amount such that the total oxygen present in the silicon nitride composite, including any oxygen derived from impurities or contaminants, is in the range 3-7% by weight.

6. A method as claimed in claim 4 or 5, characterised in that the heat treating is carried out at a temperature of 1200 - 1400°C.

7. A method as claimed in claim 4, 5 or 6, characterised in that the heat treating is carried out for 72 - 200 hours.

8. A method as claimed in any preceding claim, characterised in that the total amount of sintering aid or aids is in the range 0.1-20% by weight.

9. A method as claimed in any preceding claim characterised in that sintering is carried out in a substantially oxygen-free atmosphere.

10. A method as claimed in any preceding claim characterised in that sintering is carried out in an atmosphere of 90% nitrogen and 10% hydrogen by weight.

11. A method as claimed in any preceding claim characterised in that sintering is carried out in a powder bed composed of silicon nitride, boron nitride and magnesium oxide, after formation of the compact by pressing or shaping.

12. A method as claimed in any preceding claim, characterised in that the sintering is carried out at
a temperature of between 1200°C and 1800°C.

13. A method as claimed in any preceding claim,
characterised in that the sintering time is in the
range twenty minutes to five hours.

**0107919**

# European Patent Office

## EUROPEAN SEARCH REPORT

Application number

EP 83 30 5808

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| P,Y | EP-A-0 071 997 (TOKYO SHIBAURA DENKI K.K.)<br>* Claims; page 5, lines 6-22; page 6, lines 15-22 * | 1,2,12 | C 04 B 35/58 |
| X | GB-A-2 010 913 (FIAT STA PER AZIONI)<br>* Claims 1-10 * | 1-3,11 | |
| Y | * Claims 1-3, 5, 7-14 * | 4,12 | |
| Y | GB-A-2 010 915 (FIAT STA PER AZIONI)<br>* Claims 1, 2, 4-6, 9, 11; page 2; example 1 * | 1,4,6-8,12 | |
| | | | **TECHNICAL FIELDS SEARCHED (Int. Cl. ³)** |
| X | BE-A- 764 545 (JOSEPH LUCAS (INDUSTRIES) LTD.)<br>* Page 3, lines 17-27 * | 1,10 | C 04 B 35/58 |
| Y | * Claim I; page 3, lines 17-27 * | 1,4,6-9 | |
| Y | US-A-4 332 909 (K. NISHIDA et al.)<br>* Claims; table * | 1,9,12 | |
| | --- -/- | | |

The present search report has been drawn up for all claims

| Place of search | Date of completion of the search | Examiner |
|---|---|---|
| BERLIN | 22-12-1983 | STROUD J.G. |

0107919

**European Patent Office**

**EUROPEAN SEARCH REPORT**

Application number

EP 83 30 5808

| | DOCUMENTS CONSIDERED TO BE RELEVANT | | Page 2 |

| Category | Citation of document with indication, where appropriate, of relevant passages | Relevant to claim | CLASSIFICATION OF THE APPLICATION (Int. Cl. 3) |
|---|---|---|---|
| Y | US-A-3 950 464 (H. MASAKI) <br><br> * Claim 1; sample 15; table 3 * <br><br> ----- | 1,2,9, 12 | |
| | | | TECHNICAL FIELDS SEARCHED (Int. Cl. 3) |
| | The present search report has been drawn up for all claims | | |

| Place of search <br> BERLIN | Date of completion of the search <br> 22-12-1983 | Examiner <br> STROUD J.G. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82